## Europäisches Patentamt
## European Patent Office
## Office européen des brevets

(11) Publication number: **0 131 748**
A2

# EUROPEAN PATENT APPLICATION

(21) Application number: **84106646.7**

(22) Date of filing: **09.06.84**

(51) Int. Cl.⁴: **A 46 D 1/00**
**C 08 L 67/02**

(30) Priority: **18.07.83 US 514740**

(43) Date of publication of application:
**23.01.85 Bulletin 85/4**

(84) Designated Contracting States:
**DE FR GB IT**

(71) Applicant: **ALLIED CORPORATION**
Columbia Road and Park Avenue P.O. Box 2245R (Law Dept.)
Morristown New Jersey 07960(US)

(72) Inventor: **Haylock, John Christopher**
c/o Allied Corporation P.O. Box 2245R
Morristown, NJ 07960(US)

(72) Inventor: **Saunders, Peter Reginald**
c/o Allied Corporation P.O. Box 2245R
Morristown, NJ 07960(US)

(72) Inventor: **Turner, Garland Linwood**
c/o Allied Corporation P.O. Box 2245R
Morristown, NJ 07960(US)

(72) Inventor: **Twilley, Ian Charles**
c/o Allied Corporation P.O. Box 2245R
Morristown, NJ 07960(US)

(74) Representative: **Baillie, Iain Cameron et al,**
c/o Langner Parry Isartorplatz 5
D-8000 München 2(DE)

(54) **Low moisture absorption abrasive bristle of polybutylene terephthalate.**

(57) As bristle material is disclosed having improved stiffness comprised of a thermoplastic matrix comprising polybutylene terephthalate and containing an abrasive filler.

Croydon Printing Company Ltd

EP 0 131 748 A2

# DESCRIPTION

## LOW MOISTURE ABSORPTION ABRASIVE BRISTLE OF POLYBUTYLENE TEREPHTHALATE

### BACKGROUND OF THE INVENTION

The present invention relates to bristles having an abrasive filler. More particularly, it relates to abrasive bristles of the type disclosed in U.S. Patent No. 3,522,342. This patent discloses a method for making a bristle material comprised of a thermoplastic matrix and an abrasive filler material dispersed therein. The thermoplastic materials contemplated, include nylon, and blends of nylon and polyester. While these bristles are generally stiff and abrasive, in applications where they are exposed to hot water their stiffness (expressed as tensile modulus) tends to suffer because of water absorption.

### SUMMARY OF THE INVENTION

The present invention comprises a bristle material having a diameter ranging from about .02 inches to .09 inches (0.05 TO 0.23 cm), and consisting essentially of polybutylene terephthalate (PBT), and an abrasive filler material dispersed therein, said PBT having an intrinsic viscosity (I.V.) of at least about 0.60; and said abrasive filler being present in an amount of about 5 to 50 weight percent based on the total weight of the bristle.

### DETAILED DESCRIPTION

The bristle material of the present invention consists essentially of a thermoplastic matrix of polybutylene terephthalate having a relatively high intrinsic viscosity (I.V.) in the bristle of at least 0.60. This high viscosity is important because it assures adequate stiffness in the bristles. To achieve this viscosity in the bristle, the polymer fed to the extruder should have a viscosity of at least about 0.95, and the polymer and filler must be kept relatively dry.

The polybutylene terephthalate used herein is preferably derived from the polycondensation of 1,4-butanediol and dimethyl terephthalate or terephthalic acid,

-2-

but may be derived from other well known raw materials. The polybutylene terephthalate has an intrinsic viscosity (I.V.) ranging between about 0.60 and 1.20, with a preferred I.V. ranging between about .7 and 1.0. Intrinsic viscosity is obtained by extrapolation of viscosity values to zero concentration of solutions of polybutylene terephthlate in a 60 to 40 weight/volume ratio of phenol and tetrachloroethane. The measurements are made at 25°C. The polybutylene terephthalate melts between about 223°C and 229°C. The polybutylene terephthalate can contain minor amounts, up to about 5 percent, of other comonomers such as 1,4,cyclohexyldimethyldiol, butyldiol, neopentyldiol, diethylene glycol, or glutaric acid.

The abrasive fillers usable include silicon carbide, aluminum oxide, asbestos particles, diamond particles, ceramic particles, etc. The range of filler in the final product is from about 5 to 50 percent by weight of the bristle, preferably 15-30 percent.

The present invention is particularly useful in abrasive filled bristle materials wherein the abrasives have a hardness value, as rated by the Knoop Scale, greater than about 80 and preferably greater than about 1,000. The Knoop Scale values are determined by measuring the indentation resulting when a weighted diamond pyramid penetrates the test material. Thus, the hardness value is experienced as the load in kilograms divided by the projected area in square millimeters.

In addition to the aforementioned hardness, the abrasives found most useful were those which will pass through a screen size of about 10 to 1,500 mesh, preferably about 80 to 500. Accordingly, the abrasive filler may be aluminum oxide or silicon carbide each having a grit size ranging from about 10 to 1,500 mesh, preferably about 80 to 500 and a hardness value of about 1,250 to 1,750 for aluminum oxide and about 2,130 to 2,500 for silicon carbide, or the abrasive filler may be diamond dust having a grit size of about 80 to 320 and a hardness value of about 5,500 to 6,950. Although aluminum oxide, silicon carbide, and diamond dust are the preferred abrasive fillers, other abrasives having the aforementioned hardness and grit sizes can be utilized. Representative examples of other abrasives employable in the present process are boron carbide, tungsten carbide, tantalum carbide, and the like.

The extruded bristles may be produced by the process described in U.S. Patent No. 3,522,342, which is hereby incorporated herein by reference. The total stretch imparted to the bristles is preferably approximately 2 to 4 times their original length. This stretching results in superior tensile modulus and Bend Recovery.

The products of the present invention are in the form of a strand having a wide variety of cross-sectional configurations and have a diameter from about 0.01 inch (0.025 cm) to 0.09 inch (0.23 cm) preferably .02-.07 (0.05 to 0.18 cm) inch.

The extruded products of the present invention may be cut into unit lengths, such as about 5 to 10 inches, thereby forming bristles which can be utilized in making abrasive wheels. The unit lengths may be about 2 to 3 feet long (0.61 to 0.91 m) for use in making brooms.

Suprisingly, it has been found that when a polybutylene terephthalate is used, preferably having an I.V. of about 0.60 to 1.20, the resulting bristle has stiffness expressed as tensile modulus superior to that of nylon alone and the bend recovery is superior to that of the polyester alone, thus providing on balance a product with acceptable bend recovery and superior stiffness relative to nylon.

The following examples are exemplary of the present invention.

### EXAMPLE I

Utilizing the two extruder system shown in U.S. Patent No. 3,522,342, strands consisting essentially of a polybutylene terephthalate matrix containing about 24%, by weight of the total strand, of silicon carbide abrasive were extruded into a water bath, as shown in reference numeral 46 of said patent, being maintained at a temperature of about 20°C to 40°C and subsequently taken up over rolls, as shown in reference numeral 54 of said patent, to a take up reel. The strands were subsequently stretched 3.6 times their original length on an Instron Model 1125 Stretcher at a temperature of about 90°C to obtain bristles having a diameter of about .030 inches (0.076 cm). The Bend Recovery and the Tensile Modulus, tested Dry and Hot Wet, were as follows:

| DRY | | HOT WET[1] | |
|---|---|---|---|
| 20°C - 65% RH | | | |
| TM[2] (gpd) | Bend[3] Recovery | TM[2] (gpd) | Bend[3] Recovery |
| 11 | 70% | 11 | 80% |

[1] Hot Wet conditions are simulated by immersing samples in boiling water for 15 minutes, then testing after removing from the water.

[2] TM = Tensile Modulus which is determined by the method described in ASTM-D885, immediately after removing from the water.

[3] Bend Recovery is a test in which the bristle material is coiled 10 times around 0.25 inch (0.64 cm) diameter mandrel, placed in water for 1 hour at room temperature, and then slid off the mandrel and allowed to sit for 1 hour during which time the coils tend to expand. After the 1 hour period, the remaining coils are counted. The number of coils remaining (N) is used to determine Percent Bend Recovery (BR) according to the following formula:

$$B = (10-N)10$$

(In the case of "Hot Wet" conditions the strand is allowed to cool to room temperature before subjecting it to the Bend Recovery Test.)

## EXAMPLE 2

Repeat Example 1 but include in the bristle material, 24% by weight of silicon carbide based on the total weight of the bristle.

## EXAMPLE 3

Repeat Example 1 but use 20 weight percent aluminum oxide based on the total weight of the bristle.

While exemplary embodiments of the invention have been described, the true scope of the invention is to be determined from the following claims.

What is claimed is:

1. A bristle material comprised of a thermoplastic matrix and an abrasive filler material dispersed therein;

    (a) said bristle material having a diameter ranging from about 0.02 to 0.09 inches (0.05 to 0.23 cm)

    (b) said thermoplastic matrix consisting essentially of polybutylene terephthalate having an intrinsic viscosity of at least about 0.60; and

    (c) said abrasive filler being present in an amount of about 5 to 50 weight percent based on the total weight of the bristle.

2. The bristle material of claim 1 wherein the abrasive material has a Knoop Scale hardness of greater than about 1,000, is present in concentrations ranging from about 15 to 30 percent based on the weight of the filled bristle, and has a grit size passing through a screen size of about 10 to 1,500 mesh.

3. The bristle material of claim 3 wherein the abrasive material has a grit size passing through a screen size about 80 to 500.

4. The bristle material of claim 3 wherein the abrasive material silicon carbide and has a Knoop Scale hardness of about 2,130 to 2,500.

5. The bristle material of claim 3 wherein the abrasive material is aluminum oxide having a Knoop Scale hardness of about 1,250 to 1,750.

6. The bristle material of claim 1 wherein the bristle material has a diameter ranging from about .02 inches (0.05 cm) to .06 inches (0.15 cm).